# EUROPÄISCHE PATENTSCHRIFT

(11) **EP 3 778 097 B1**
(45) Veröffentlichungstag und Bekanntmachung des Hinweises auf die Patenterteilung: **18.03.2026**
(21) Anmeldenummer: 20183920.6
(22) Anmeldetag: 03.07.2020
(51) Int. Cl.: B23K 26/10, B23K 26/12, B23K 26/38, H02G 1/12

(54) **LASERBEARBEITUNGSVORRICHTUNG FÜR GESCHIRMTE LEITUNGEN UND VERFAHREN ZUM BETREIBEN EINER LASERBEARBEITUNGSVORRICHTUNG FÜR GESCHIRMTE LEITUNGEN**
LASER PROCESSING DEVICE FOR SHIELDED LINES AND METHOD OF OPERATING A LASER PROCESSING DEVICE FOR SHIELDED LINES
DISPOSITIF D'USINAGE LASER POUR CONDUITES BLINDÉES ET PROCÉDÉ DE FONCTIONNEMENT D'UN DISPOSITIF D'USINAGE LASER POUR CONDUITES BLINDÉES

(30) Priorität: 12.08.2019 DE 102019121631
(43) Veröffentlichungstag der Anmeldung: 17.02.2021
(73) Patentinhaber: MD ELEKTRONIK GmbH, 84478 Waldkraiburg (DE)
(72) Erfinder: Strauß, Benedikt, 83559 Mittergars (DE)

(56) Entgegenhaltungen:
- EP-A1- 3 404 786
- WO-A1-2008/084216
- DE-A1- 102018 128 922
- US-A1- 2003 006 219
- US-A1- 2015 162 729

## Beschreibung

Die Erfindung betrifft Ausführungsformen einer Laserbearbeitungsvorrichtung für geschirmte Leitungen sowie Ausführungsformen eines Verfahrens zum Betreiben einer solchen Laserbearbeitungsvorrichtung.

Es ist bekannt, geschirmte Leitungen, wie z. B. elektrische Kabel, mittels Laserstrahlung zu bearbeiten, um beispielsweise einen Kabelmantel des Kabels umlaufend einzuschneiden oder ein Schirmdrahtgeflecht der geschirmten Leitung automatisiert auf Maß abzuschneiden. Dabei wird ein Endabschnitt der zu bearbeitenden geschirmten Leitung durch eine Öffnung hindurch in eine Prozesskammer einer Laserbearbeitungsvorrichtung, wie z. B. einer Laserschneidevorrichtung, eingeführt. Die Laser-Bearbeitung erfolgt sodann in der Prozesskammer. Aus Sicherheitsgründen ist es wichtig, dass das Bedienerumfeld gegenüber dem Laserprozess abgeschottet ist, d.h., dass keine für den Menschen gefährliche Laserstrahlung aus der Prozesskammer in das Bedienerumfeld gelangen kann.

Üblicherweise wird zu diesem Zweck eine für die jeweilige Laserklasse ausgelegte Schutzhaube während der Bearbeitung über die Laserbearbeitungsvorrichtung gestülpt bzw. die Laserbearbeitungsvorrichtung ist innerhalb der diese allseitig umgebenden Schutzhaube aufgenommen Die Schutzhaube muss hinreichend voluminös ausgestaltet sein, um die innenliegende Mechanik, welche insbesondere eine Greifvorrichtung zum Zentrieren der geschirmten Leitung in der Prozesskammer umfassen kann, unterzubringen. Durch die somit erforderliche vergleichsweise raumgreifende Bauweise ist der Bauraumbedarf bei einer solchen Lösung relativ hoch. Zudem ergeben sich Nachteile bezüglich der Dynamik und damit der Taktzeit des (wiederholt ausgeführten) Laserbearbeitungsprozesses.

Die EP 3 404 786 A1 beschreibt mit Bezug auf die dortige Fig. 6 eine Laserschneidevorrichtung mit einem Schutzgehäuse. Das Schutzgehäuse umfasst eine Öffnung, die durch ein Befestigungsgehäuse verschlossen ist. Das Befestigungsgehäuse umfasst eine Gehäuseöffnung, über die ein Kabelende durch eine Kabeleinführöffnung der Laserschneidevorrichtung für den das Kabelende bearbeitenden Laser zugänglich ist. Die Kabeleinführöffnung ist als Durchgang ausgebildet, innerhalb dessen der Kabelmantel einen geringen Abstand zu der Innenwandung des Durchgangs aufweist, so dass das Kabel mit Bezug auf den Durchgang sehr präzise positioniert werden muss. Zwischen dem Schutzgehäuse und dem Befestigungsgehäuse ist kann eine Dichteinrichtung eingebracht sein, die ein Austreten von Gasen oder Partikeln durch die Öffnung des Schutzgehäuses verhindern.

Die US 9,876,338 B2 beschreibt eine Vorrichtung zum Abisolieren eines elektrischen Kabels. Die Vorrichtung umfasst einen Greifer für das Kabel, der vor der Öffnung einer Prozesskammer eines Laserschneidprozesses angeordnet ist. Dabei dichtet eine das Kabel umgebende elastische Manschette eine Eingangsöffnung der Prozesskammer ab, sodass das Kabel und die elastische Manschette gemeinsam ein Austreten von Laserstrahlung aus der Vorrichtung verhindern.

EP 3 404 786 A1 beschreibt, mit Bezug auf Fig. 4B und Fig. 6, eine Laserbearbeitungsvorrichtung nach dem Oberbegriff des Anspruchs 1.

Die vorbekannten Lösungen zum sicherheitstechnischen Abschirmen einer Laserbearbeitungsvorrichtung haben den Nachteil, dass sie einer wiederholten Ausführung des Laserbearbeitungsprozesse mit großer Taktzahl erschweren, da die Geschwindigkeit, mit welcher die Leitung in die Prozesskammer eingeführt werden kann, durch die jeweiligen mechanischen Abdichtmechanismen der Prozesskammer begrenzt ist.

Aufgabe der vorliegenden Erfindung ist es, eine Laserbearbeitungsvorrichtung für eine geschirmte Leitung vorzuschlagen, bei der ein Austreten gefährlicher Laserstrahlung zuverlässig verhindert wird und die zugleich eine dynamische wiederholte Ausführung des Laserbearbeitungsprozesses ermöglicht.

Hiervon ausgehend wird der Gegenstand des unabhängigen Anspruchs 1 vorgeschlagen. Merkmale einiger Ausführungsbeispiele sind in den abhängigen Ansprüchen angegeben. Die Merkmale der abhängigen Ansprüche können miteinander zur Ausbildung weiterer Ausführungsformen kombiniert werden, sofern nicht ausdrücklich etwas anderes angegeben ist.

Gemäß einem ersten Aspekt umfasst eine Laserbearbeitungsvorrichtung für geschirmte Leitungen: eine Prozesskammer zum Bearbeiten eines darin angeordneten Endabschnitts einer geschirmten Leitung mittels Laserstrahlung, wobei ein Gehäuse der Prozesskammer eine Öffnung zum Einführen des Endabschnitts entlang einer Einführachse definiert; und eine Greifvorrichtung zum Fixieren der geschirmten Leitung in der Öffnung in einer Bearbeitungsstellung der Laserbearbeitungsvorrichtung, wobei sich der Endabschnitt in der Bearbeitungsstellung in die Prozesskammer hinein erstreckt. Dabei ist die Greifvorrichtung in der Bearbeitungsstellung berührungslos an dem Gehäuse positioniert. Die Greifvorrichtung umfasst einen ersten Vorsprungabschnitt, der sich in der Bearbeitungsstellung der Laserbearbeitungsvorrichtung wenigstens abschnittsweise entlang der Einführachse in die Öffnung hinein erstreckt, wobei in der Bearbeitungsstellung der erste Vorsprungabschnitt die Öffnung so weit ausfüllt, dass ein durchgehender Dichtspalt zwischen der Greifvorrichtung und dem Gehäuse verbleibt und wobei erfindungsgemäß weiter die Greifvorrichtung in der Bearbeitungsstellung in einer Richtung entlang der Einführachse vollständig abdeckt

Die Erfindung geht von dem Gedanken aus, dass bei einer Laserbearbeitungsvorrichtung für geschirmte Leitungen eine Greifvorrichtung zugleich die Funktionen des Fixierens bzw. Positionierens eines zu bearbeitenden Leitungsabschnitts in einer Öffnung einer Prozesskammer und des Abdichtens der Prozesskammer zur Vermeidung des Austreten von Laserstreustrahlung erfüllen kann. Somit kann die Greifvorrichtung sowohl eine Prozessfunktion, die insbesondere auch ein Zentrieren des Leitungsendes in der Prozesskammer umfassen kann, als auch eine Schutzfunktion (Schutz des Bedienerumfelds vor Laserstrahlung) übernehmen. Die Kombination dieser beiden Funktionen in einem Bauteil ermöglicht im Vergleich zu Lösungen, bei welchen für jede dieser Funktionen ein separates System vorgesehen ist, eine Einsparung von Bauraum, Material und somit Kosten. Insbesondere kann der mechanische Aufwand für eine großräumige Umhausung mit einer Schutzhaube entfallen.

Darüber hinaus kann die hier vorgeschlagene Lösung eine kürzere Taktzeit eines wiederholt ausgeführten Laserbearbeitungsprozesses ermöglichen; denn bei konventionellen Lösungen, bei welchen zwei verschiedene Systeme für die oben beschriebenen Prozess- und Schutzfunktionen nötig sind, können diese Systeme aus mechanischen Gründen nicht immer parallel gefahren werden, was zu einer Taktzeitverlängerung führt.

Dass die Greifvorrichtung bei der erfindungsgemäßen Lösung in der Bearbeitungsstellung berührungslos an dem Gehäuse positioniert ist, trägt zusätzlich zu einer potentiell kürzeren Taktzeit des Laserbearbeitungsprozesses bei. Demnach wird die Laserbearbeitungsvorrichtung nämlich nicht "auf Block gefahren", d. h., es kommt beim Herstellen der Bearbeitungsstellung, wobei eine Relativbewegung zwischen der Prozesskammer und der Greifvorrichtung mit dem Endabschnitt der geschirmten Leitung stattfindet, nicht zu einem direkten Kontakt zwischen der Greifvorrichtung und dem Gehäuse der Prozesskammer. Die Relativbewegung, bei welcher sich Greifvorrichtung und Gehäuse einander annähern, kann somit dynamisch und potentiell insgesamt schneller ausgeführt werden als bei Lösungen, bei welchen ein Kontakt zwischen Greifvorrichtung und Prozesskammergehäuse vorgesehen ist (was eine sehr genaue Positionsregelung bei der Annäherung erfordern, um schädliche Kollisionen zu verhindern).

Weil die Greifvorrichtung einen ersten Vorsprungabschnitt umfasst, der z. B. (gegenüber anderen Abschnitten der Greifvorrichtung) entlang der Einführachse zu der Öffnung hin vorsteht und der sich in der Bearbeitungsstellung der Laserbearbeitungsvorrichtung wenigstens abschnittsweise entlang der Einführachse in die Öffnung hinein erstreckt, kann auch bei einer berührungslosen Positionierung der Greifvorrichtung an dem Gehäuse der Prozesskammer ein Austreten von schädlicher Laserstrahlung zuverlässig verhindert werden, wenn erfindungsgemäß vorgesehen ist, dass die Greifvorrichtung in der Bearbeitungsstellung die Öffnung in einer Richtung entlang der Einführachse vollständig abdeckt. Insbesondere kann ein zwischen dem ersten Vorsprungabschnitt und dem Gehäuse verbleibender radialer Dichtspalt eine Spaltdichtung ausbilden, wobei die Spaltdichtung einen Teil einer "Labyrinthdichtung" bildet, in welcher sich die Laserstrahlung verläuft, sodass allenfalls eine stark verringerte und dadurch ungefährliche Laserintensität nach außen gelangt. Beispielsweise kann vorgesehen sein, dass der Dichtspalt wenigstens einmal, bevorzugt mehrfach, seine Verlaufsrichtung um wenigstens 90° ändert. Dies wird weiter unten mit Bezug auf beispielhafte Ausführungsform näher erläutert.

Nachstehend werden einige Ausführungsformen beschrieben:

Bei der Laserbearbeitungsvorrichtung kann es sich insbesondere um eine Laserschneidevorrichtung handeln. Beispielsweise kann die Laserschneidevorrichtung ausgebildet sein, ein Schirmdrahtgeflecht im Bereich des Endabschnitts der geschirmten Leitung auf Maß abzuschneiden. Zu diesem Zweck kann die Laserbearbeitungsvorrichtung beispielsweise eine Lasereinrichtung, wie z. B. einen Faserlaser, zum Bereitstellen (Erzeugen) geeigneter Laserstrahlung umfassen. Die Laserstrahlung kann beispielsweise selektiv auf Metall einwirken und somit gezielt (nur) metallische Abschnitte der geschirmten Leitung schneiden. Ein von der Laserbearbeitungsvorrichtung bereitgestellter Laserstrahl wird innerhalb der Prozesskammer durch Umlenkspiegel so abgelenkt, dass der abgelenkte Laserstrahl das zu bearbeitende, ggf. abgemantelte Ende des Endabschnitts des Kabels um die Kabelachse ringförmig umlauft und somit konzentrisch zu der Kabelachse einschneidet; das gilt für den Fall, dass der Laserstrahl zum Einschneiden des Kabelmantels vorgesehen ist, der das Kabel umgibt, wie auch für den Fall, dass der Laserstrahl zum Einschneiden eines metallischen Schirmgeflechts vorgesehen ist, wobei das Schirmgeflecht nach Entfernen des Kabelmantels zugänglich ist.

Die Greifvorrichtung kann z. B. zwei oder mehr Teilstücke umfassen, die zum Einnehmen einer Greifstellung, in welcher die Greifvorrichtung die geschirmte Leitung greift, aneinander ansetzbar sind. Die Teilstücke der Greifvorrichtung werden nachfolgend auch als (Greifer-)Backen bezeichnet. Beispielsweise kann die geschirmte Leitung in der Greifstellung der Greifvorrichtung durch die aneinander angesetzten Backen in einer Durchführung, die beispielsweise durch entsprechende Ausnehmungen in den Backen gebildet wird, geklemmt werden. Hierdurch kann die Greifvorrichtung zugleich eine positionierende/zentrierende wie auch - gemeinsam mit der geschirmten Leitung - eine abdichtende Funktion (bezüglich der Laserstrahlung) erfüllen.

Die Greifvorrichtung kann insbesondere ausgebildet sein, in der Bearbeitungsstellung der Laserbearbeitungsvorrichtung zu verhindern, dass Laserstrahlung aus der Laserbearbeitungsvorrichtung austritt. Durch die Gestaltung der Greifvorrichtung in Hinblick auf die Öffnung des Gehäuses der Prozesskammer kann insbesondere ermöglicht werden, dass keine Laserstrahlung, weder gerichtete (reflektierte) strahlenförmige Laserstrahlung noch Laser-Streustrahlung, aus der Prozesskammer austreten kann und somit den Sicherheitsvorschriften für die Bedienung der Prozesskammer auf einfache Weise entsprochen werden kann.

Ist erfindungsgemäß vorgesehen, dass die Greifvorrichtung in der Bearbeitungsstellung die Öffnung in einer Richtung entlang der Einführachse vollständig abdeckt, kann beispielsweise die Greifvorrichtung in der Bearbeitungsstellung sowohl die Öffnung als auch einen Randbereich des Gehäuses, welcher die Öffnung umgibt, vollständig überlappen. Somit wird ein direktes Austreten von Laserstrahlung aus der Prozesskammer unterbunden. Es sollte dabei beachtet werden, dass auch die von der Greifvorrichtung gehaltene geschirmte Leitung selbst zum vollständigen Abdecken der Öffnung beitragen kann. Beispielsweise wird die geschirmte Leitung in einer Greifstellung der Greifvorrichtung durch wenigstens zwei Backen der Greifvorrichtung an einer zentralen Position in einer Durchführung eingeklemmt; an dieser Position kann in der Bearbeitungsstellung somit die geschirmte Leitung selbst zum Abdichten der Laserbearbeitungsvorrichtung gegenüber Austreten der Laserstrahlung beitragen. Mit der vorstehenden Formulierung, wonach die Greifvorrichtung in der Bearbeitungsstellung die Öffnung in einer Richtung entlang der Einführachse vollständig abdeckt, soll auch eine solche Anordnung umfasst sein.

Bei einer zweckmäßigen Ausgestaltung der erfindungsgemäßen Laserbearbeitungsvorrichtung bildet ein in der Bearbeitungsstellung zwischen dem Gehäuse und der Greifvorrichtung verbleibender Dichtspalt eine Labyrinthdichtung für die Laserstrahlung. Das bedeutet, dass die Laserstrahlung aus der Prozesskammer allenfalls auf einem Streupfad durch den Dichtspalt aus dem nach außerhalb der Laserbearbeitungsvorrichtung gelangen könnte, auf welchem es sich durch wiederholte Reflektion bzw. Streuung verliert.

Gemäß einer vorteilhaften Ausführungsform weist der erste Vorsprungabschnitt, in der Bearbeitungsstellung der Laserbearbeitungsvorrichtung betrachtet, eine bezüglich der Einführachse radialsymmetrische, wie z. B. kreisscheibenförmige, Grundform auf. Beispielsweise kann der erste Vorsprungabschnitt in Form einer oder mehrerer (hintereinander angeordneter) Kreisscheiben ausgestaltet sein, die entlang der Einführachse gegenüber anderen Abschnitten der Greifvorrichtung in Richtung der Prozesskammer vorsteht bzw. vorstehen. Dabei kann der zweite Vorsprungabschnitt aus mehreren Teilen zusammengesetzt sein, wie etwa aus zwei Halbkreisscheiben, die z. B. jeweils zu einer Greiferbacke der Greifvorrichtung gehören.

Bei einer Weiterbildung ist vorgesehen, dass die Greifvorrichtung einen zweiten Vorsprungabschnitt aufweist, der den ersten Vorsprungabschnitt umgibt. Insbesondere kann der zweite Vorsprungabschnitt den ersten Vorsprungabschnitt - in der Bearbeitungsstellung - bezüglich der Einführachse radial umgeben. Der zweite Vorsprungabschnitt steht dabei, ebenso wie der erste Vorsprungabschnitt, in axialer Richtung gegenüber anderen Abschnitten der Greifvorrichtung in Richtung der Prozesskammer vor.

Bevorzugt weist auch der zweite Vorsprungabschnitt - in der Bearbeitungsstellung der Laserbearbeitungsvorrichtung- eine bezüglich der Einführachse radialsymmetrische Grundform auf. Beispielsweise kann der zweite Vorsprungabschnitt in Form eines Kreisrings ausgestaltet sein. Dabei kann der zweite Vorsprungabschnitt aus mehreren Teilen zusammengesetzt sein, wie etwa aus zwei Halbringen, die jeweils zu einer Greiferbacke der Greifvorrichtung gehören.

Zweckmäßig ist bei dieser Weiterbildung ferner, wenn das Gehäuse eine die Öffnung umgebende Aufnahmenut aufweist, in welcher in der Bearbeitungsstellung wenigstens ein Abschnitt der Greifvorrichtung berührungslos in Bezug auf die Flächen der Aufnahmenut aufgenommen ist. In dem Fall kann insbesondere vorgesehen sein, dass der zweite Vorsprungabschnitt in der Bearbeitungsstellung wenigstens abschnittsweise in der Aufnahmenut aufgenommen ist, ohne dass ein Kontakt zwischen einem Flächenabschnitt des zweiten Vorsprungabschnitts und der Fläche der Aufnahmenut stattfindet. Insbesondere kann ein zwischen dem zweiten Vorsprungabschnitt und einem Nutgrund der Aufnahmenut verbleibender Dichtspalt und/oder ein radialer Dichtspalt zwischen dem zweiten Vorsprungabschnitt und wenigstens einer Seitenwand der Nut einen Teil einer Labyrinthdichtung für die Laserstrahlung bilden und so zu der abdichtenden Schutzfunktion der Greifvorrichtung beitragen.

Gemäß einem zweiten Aspekt wird ein Verfahren zum Betreiben einer Laserbearbeitungsvorrichtung entsprechend dem ersten Erfindungsaspekt vorgeschlagen. Dabei wird die Laserbearbeitungsvorrichtung in die Bearbeitungsstellung gebracht, indem die Greifvorrichtung berührungslos an dem Gehäuse positioniert wird, so dass in der Bearbeitungsstellung ein erster Vorsprungabschnitt sich in die Öffnung des Gehäuses erstreckt und ein durchgehender Dichtspalt zwischen der Greifvorrichtung und dem Gehäuse verbleibt, wobei erfindungsgemäß vorgesehen ist, dass die Greifvorrichtung in der Bearbeitungsstellung die Öffnung in einer Richtung entlang der Einführachse vollständig abdeckt. Insbesondere kann dabei durchweg mindestens ein Dichtspalt zwischen Greifvorrichtung und Gehäuse verbleiben.

Das vorstehend und nachfolgend mit Blick auf die Laserbearbeitungsvorrichtung gemäß dem ersten Aspekt Beschriebene gilt analog für das Verfahren gemäß dem ersten Aspekt und umgekehrt.

Weitere Einzelheiten und Vorteile der Erfindung werden bei der nachfolgenden Beschreibung einiger Ausführungsbeispiele anhand der Figuren deutlich werden.

Es zeigen:
- Fig. 1: exemplarisch und schematisch einen Abschnitt einer Laserbearbeitungsvorrichtung gemäß einer oder mehreren Ausführungsformen in einer Querschnittsansicht;
- Fig. 2: exemplarisch und schematisch einen Abschnitt einer Laserbearbeitungsvorrichtung gemäß einer oder mehreren Ausführungsformen in einer perspektivischen Ansicht;
- Fig. 3: exemplarisch und schematisch einen Abschnitt einer Laserbearbeitungsvorrichtung gemäß einer oder mehreren Ausführungsformen in einer perspektivischen Ansicht;
- Fig. 4: exemplarisch und schematisch einen Abschnitt einer Laserbearbeitungsvorrichtung gemäß einer oder mehreren Ausführungsformen in einer Querschnittsansicht;
- Fig. 5: einen vergrößerten Ausschnitt aus der Querschnittsansicht gemäß Fig. 4;
- Fig. 6-10: exemplarisch und schematisch eine Greifvorrichtung einer Laserbearbeitungsvorrichtung gemäß einer oder mehreren Ausführungsformen in verschiedenen perspektivischen Ansichten; und
- Fig. 11: exemplarisch und schematisch eine Greifvorrichtung einer Laserbearbeitungsvorrichtung gemäß einer oder mehreren Ausführungsformen in einer Querschnittsansicht.

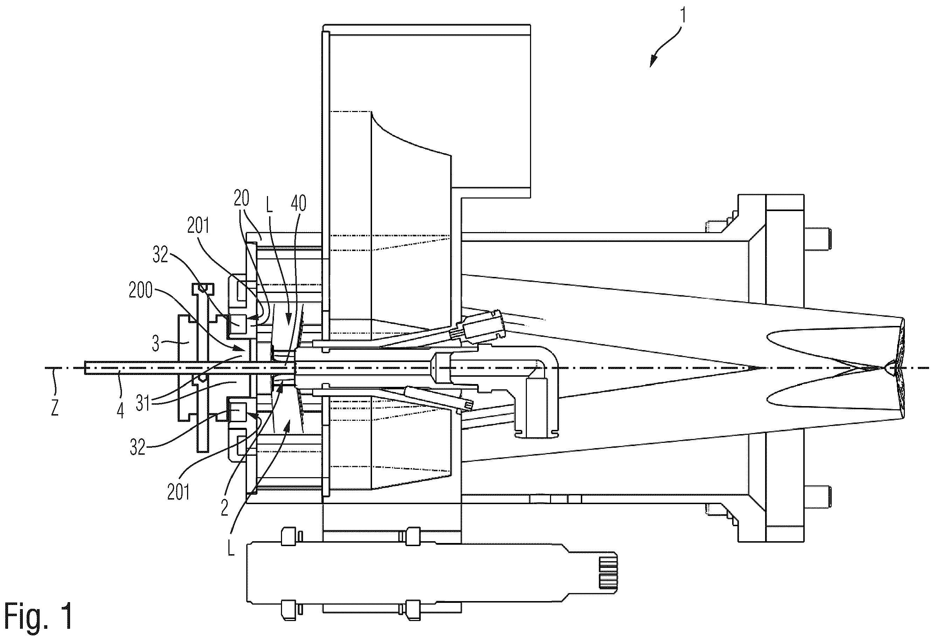

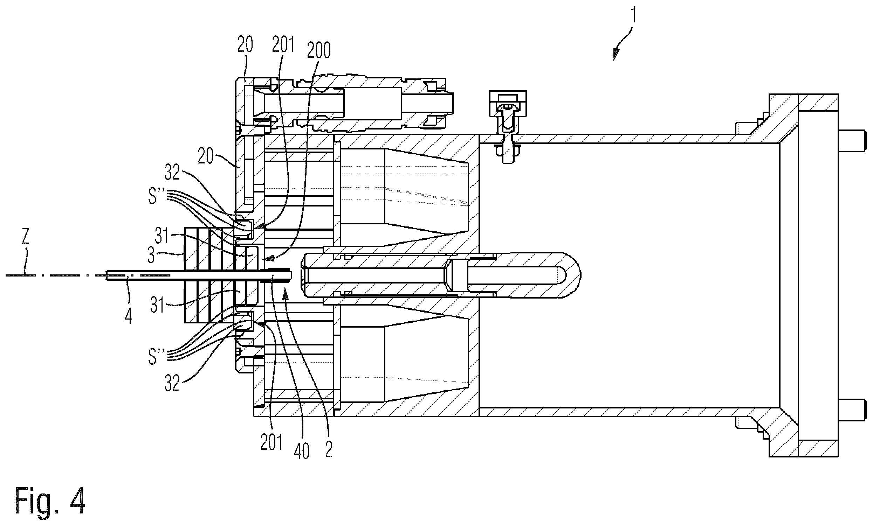

Fig. 1 bzw. Fig. 4 zeigen schematisch und exemplarisch einen Abschnitt einer Laserbearbeitungsvorrichtung 1 gemäß einer oder mehreren Ausführungsformen in einer Querschnittsansicht.

Die Laserbearbeitungsvorrichtung 1 ist beispielsweise eine Laserschneidevorrichtung zum automatisierten Abschneiden eines Schirmdrahtgeflechts der geschirmten Leitung 4 auf Maß. Die geschirmte Leitung 4 kann also eine Leitung mit einem Schirmdrahtgeflecht sein.

Speziell ist in der Fig. 1 ein sogenannter Laserkopf einer Laserbearbeitungsvorrichtung 1 gezeigt. Der Laserkopf umfasst insbesondere eine Prozesskammer 2 zum Bearbeiten eines darin angeordneten Endabschnitts 40 der geschirmten Leitung 4 mittels einer Laserstrahlung L. Die Laserbearbeitungsvorrichtung 1 weist ferner eine (nicht dargestellte) Lasereinrichtung zum Erzeugen der Laserstrahlung L auf. Beispielsweise kann sich eine solche Lasereinrichtung mit Bezug auf Fig. 1 rechts von dem dargestellten Abschnitt, d. h. von dem Laserkopf, befinden. Die Lasereinrichtung kann z. B. einen Faserlaser umfassen, dessen Laserstrahlung in den Laserkopf eingeleitet und über eine geeignete Optik in die Prozesskammer 2 umgelenkt wird. Dem Fachmann sind Ausführungsmöglichkeiten hinsichtlich derartiger Lasereinrichtungen und zugehöriger Optiken an sich bekannt. Diese werden daher an dieser Stelle nicht in größerem Detail beschrieben.

Die in einem vorderen Teil des Leserkopfs angeordnete Prozesskammer 2 umfasst ein Gehäuse 20 mit einer Öffnung 200 zum Einführen des zu bearbeitenden Endabschnitts 40 der geschirmten Leitung 4. Dabei erfolgt das Einführen des Endabschnitts 40 in die Prozesskammer 2 durch eine Relativbewegung zwischen der Prozesskammer 20 (d. h. dem Laserkopf) einerseits und einer die geschirmte Leitung 4 fassenden Greifvorrichtung 3 andererseits.

Beispielsweise kann der Laserkopf zu diesem Zweck entlang einer Einführachse Z auf die Greifvorrichtung 3 der geschirmten Leitung 4 zubewegt werden (und/oder umgekehrt), bis eine Bearbeitungsstellung der Laserbearbeitungsvorrichtung 1 erreicht ist, in welcher sich der Endabschnitt 40 der geschirmten Leitung 4 in einer gewünschten Lage und Position die Prozesskammer 2 hinein erstreckt. Diese Bearbeitungsstellung ist in Fig. 1 veranschaulicht. Wie dargestellt, fixiert die Greifvorrichtung 3 die geschirmte Leitung 4 in der Öffnung 200 und zentriert zugleich den Endabschnitt 40 in der Prozesskammer 2 in einer geeigneten, definierten Bearbeitungsposition.

Beispielsweise umfasst die Greifvorrichtung 3 zu diesem Zweck zwei (oder mehr) separate Teilstücke in Form von Greiferbacken 3-A, 3-B, welche pneumatisch in eine Greifstellung gebracht werden können, in der sie die geschirmte Leitung zwischen sich einklemmen. Weitere Einzelheiten bezüglich der Greifvorrichtung 3 werden weiter unten mit Bezug auf die nachfolgenden Figuren näher erläutert. Die Greifvorrichtung 3 ist durch eine in den Figuren nicht dargestellte Stützvorrichtung gestützt, wobei die Stützvorrichtung eine entlang der ein für Richtung Z verfahrbare Schlittenanordnung umfassen kann, so dass die Greifvorrichtung 3 mittels der Schlittenanordnung den Endabschnitt 40 in der Prozesskammer 2 zu der Bearbeitungsposition hin bzw. aus der Bearbeitungsposition fort fahren kann.

Zusätzlich zu der vorstehend beschriebenen Fixier- und Zentrierfunktion, die die Greifvorrichtung 3 mit Bezug auf die geschirmte Leitung 4 erfüllt, hat die Greifvorrichtung 3 eine Sicherheitsfunktion, indem die Greifvorrichtung 3 die Prozesskammer 2 abdeckt, um das Austreten gefährlicher Laserstrahlung aus der Laserbearbeitungsvorrichtung 1 zu verhindern. So ist in Fig. 1 erkennbar, dass die Greifvorrichtung 3 in der dargestellten Bearbeitungsstellung die Öffnung 200 in einer Richtung entlang der Einführachse Z vollständig abdeckt. Dabei erfolgt die Abdeckung teilweise (im Zentrum) durch die geschirmte Leitung 4 selbst. Die zu bearbeitende geschirmte Leitung 4 erstreckt sich in einer zentralen Position durch eine Durchführung 33 in der in der Greifvorrichtung 3 hindurch und wird in diesem Bereich dicht zwischen Greiferbacken 3-A, 3-B der Greifvorrichtung 3 eingeklemmt. Insbesondere überlappt dabei ein hinterer Abschnitt der Greifvorrichtung 3 einen die Öffnung 200 umgebenden Abschnitt des Gehäuses 20 und stellt dadurch eine vollständige Abdeckung in Richtung der Einführachse Z sicher.

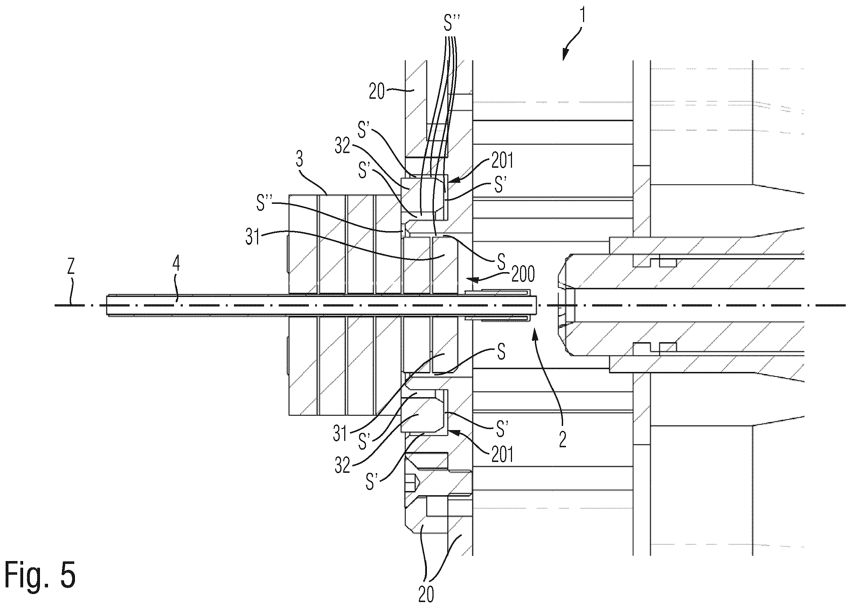

Die Greifvorrichtung 3 umfasst zudem einen ersten Vorsprungabschnitt 31, der gegenüber dem hinteren Abschnitt 3 axial (d. h. entlang der Einführachse Z) zu der Prozesskammer 2 hin vorsteht. Der erste Vorsprungabschnitt 31 erstreckt sich in der dargestellten Bearbeitungsstellung in die Öffnung 200 hinein und füllt diese weitgehend aus. Dabei ist die Greifvorrichtung 3 jedoch berührungslos an dem Gehäuse 20 positioniert, sodass im Bereich der Öffnung 200 ein durchgehender Dichtspalt S (in Fig. 1 nicht bezeichnet, vgl. z. B. Fig. 5) zwischen Greifvorrichtung 3 und Gehäuse 20 verbleibt. Der Dichtspalt S ist dabei als Ringspalt ausgebildet, der zwischen der radial außenliegenden Fläche des ersten Vorsprungabschnitts 31 und der radial gegenüberliegenden Innenseite der Öffnung 200 ausgebildet ist. Die Dicke des Dichtspalts S ist dabei deutlich geringer als die Erstreckung des ersten Vorsprungabschnittes 31 innerhalb der Öffnung 200, insbesondere ist die Dicke des Dichtspaltes S, also der Abstand zwischen der radial außenliegenden Fläche des ersten Vorsprungabschnittes 31 zu der gegenüberliegenden Innenfläche der Öffnung 200, so gering gewählt, wie es die fertigungsbedingte Toleranz der Öffnung 200 und des Außendurchmessers des ersten Vorsprungabschnittes 31 sowie die Reproduzierbarkeit der dynamischen Ein- und Ausfahrbewegung des ersten Vorsprungabschnitts 31 in die Öffnung 200 hinein bzw. aus der Öffnung 200 hinaus zulassen. Die Dicke des Dichtspalts S beträgt weniger als ca. 5%, insbesondere ca. 3 % des Durchmessers der Öffnung 200. Der erste Vorsprungabschnitt 31 dringt um ein mehr als 10-faches der Dicke des Dichtspalts S in die Öffnung 200 ein. Der Dichtspalt S ist dabei ein (erster) Teil einer im Folgenden noch näher beschriebenen Labyrinthdichtung, deren Aufgabe darin besteht, das Innere der Prozesskammer 2 gegen das Austreten von Laserstrahlung nach außen hin strahlungs-dicht abzudichten.

Nachfolgend soll anhand der weiteren Figuren näher erläutert werden, wie die Abdichtung der Laserbearbeitungsvorrichtung 1 unter Einbeziehung insbesondere des ersten Vorsprungabschnitts 31 der Greifvorrichtung 3 und des Dichtspalts S zwischen Greifvorrichtung und Gehäuse 20 im Einzelnen bewerkstelligt wird und welche optionalen weiteren strukturellen Eigenschaften der Greifvorrichtung 3 und/oder des Gehäuses 20 die Schutzfunktion unterstützen können.

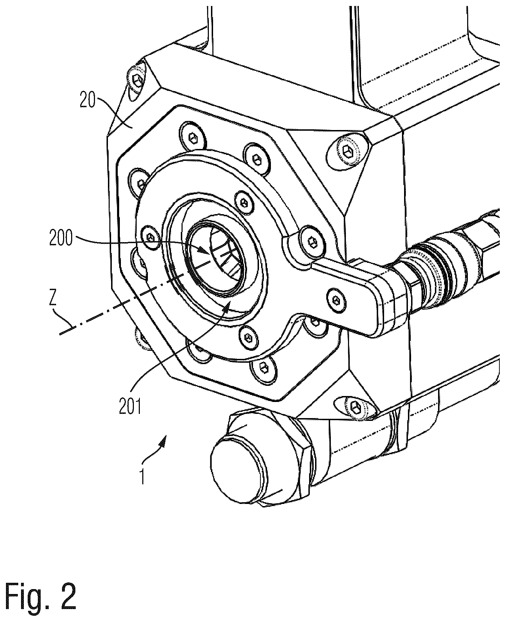

Fig. 2 zeigt beispielhaft und schematisch eine perspektivische Ansicht des Laserschutzkopfs aus Fig. 1 von schräg vorne. Die Greifvorrichtung 3 ist in Fig. 2 nicht dargestellt, d. h. es ist keine geschirmten Leitung 4 in die Prozesskammer 2 eingeführt. Die Laserbearbeitungsvorrichtung 1 befindet sich dementsprechend nicht in der Bearbeitungsstellung. Die Prozesskammer 2 ist vielmehr in einem geöffneten Zustand dargestellt. Die in Richtung der Einführachse Z weisende Öffnung 200 des Gehäuses 20 ist dabei gut erkennbar.

Die Öffnung 200 weist bei diesem Ausführungsbeispiel eine kreisförmige Umfangskontur auf. Rings um die Öffnung 200 herum ist in dem Gehäuse 20 eine ringförmige Aufnahmenut 201 ausgebildet. Die Aufnahmenut 201 dient dazu, in der Bearbeitungsstellung einen Abschnitt der Greifvorrichtung 3, nämlich bevorzugt einen kreisringförmigen zweiten Vorsprungabschnitt 32 der Greifvorrichtung 3, aufzunehmen. Dies wird weiter unten mit Bezug auf Fig. 5 näher erläutert.

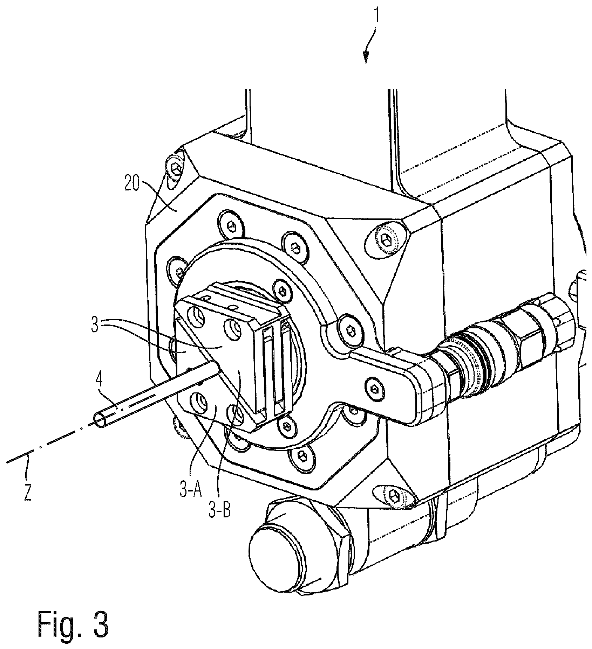

In Fig. 3 ist der Laserkopf aus Fig. 2 in einer Stellung dargestellt, die der Bearbeitungsstellung der Laserbearbeitungsvorrichtung 1 entspricht. Dabei ist die Greifvorrichtung 3 mit der darin fixierten geschirmten Leitung 4 berührungslos im Bereich der Öffnung 200 an dem Gehäuse 20 positioniert, sodass sich der (in Fig. 3 nicht dargestellte) Endabschnitt 40 der geschirmten Leitung 4 entlang der Einführachse Z in die Prozesskammer 2 hinein erstreckt.

Die Greifvorrichtung 3 umfasst zwei separate Teilstücke in Form von Greiferbacken 3-A, 3-B. In der dargestellten Greifstellung der Greifvorrichtung 3 sind die Greiferbacken 3-A, 3-B (z. B. unter der Wirkung einer nicht dargestellten Pneumatik) derart mit Kraft aneinander angesetzt, dass sie die geschirmte Leitung 4 zwischen sich einklemmen. Auf diese Weise fixiert und zentriert die Greifvorrichtung 3 in der Bearbeitungsstellung die geschirmte Leitung 4 in der Öffnung 200, sodass der zu bearbeitende Endabschnitt 40 innerhalb der Prozesskammer 2 sich exakt an einem für die Laserbearbeitung geeigneten Ort befindet.

Fig. 4 zeigt eine weitere Querschnittsansicht einer in der Bearbeitungsstellung befindlichen Laserbearbeitungsvorrichtung 1 gemäß einer oder mehreren Ausführungsformen. Der grundsätzliche Aufbau entspricht dabei der Querschnittsansicht gemäß Fig. 1. Insoweit wird auf die vorstehende Beschreibung verwiesen.

In Fig. 5 ist ein vergrößerter Ausschnitt aus der Querschnittsansicht gemäß Fig. 4 dargestellt, welcher insbesondere den Bereich der Öffnung 200 des Gehäuses 2 sowie die dort positionierte Greifvorrichtung 3 umfasst. In der vergrößerten Querschnittsansicht ist gut erkennbar, dass der erste Vorsprungabschnitt 31 der Greifvorrichtung 3 sich in der dargestellten Bearbeitungsstellung in die Öffnung 200 hinein erstreckt, wobei ein radialer Dichtspalt S zwischen dem Gehäuse 20 und dem ersten Vorsprungabschnitt 31 verbleibt.

Ferner zeigt die Querschnittsansicht in Fig. 5 das ringförmige zweite Vorsprungelement 32, welches das erste Vorsprungelement 31 bezüglich der Einführachse Z radial umgibt. Das zweite Vorsprungelement 32 erstreckt sich in die die Öffnung 200 umgebende ringförmige Aufnahmenut 201 hinein. Dabei verbleibt ein weiterer, zweiter Dichtspalt S' zwischen dem zweiten Vorsprungelement 32 und dem Gehäuse 20. Ein Abschnitt des zweiten Dichtspalts S' zwischen dem zweiten Vorsprungelement 32 und dem Gehäuse 20 erstreckt sich entlang eines Nutgrundes der Aufnahmenut 201. Weitere Abschnitte des zweiten Dichtspalts S' erstrecken sich entlang einer inneren bzw. einer äußeren Seitenwand der Aufnahmenut 201. Der zweite Dichtspalt S' weist, wie in Fig. 5 erkennbar, einen kurzen, radialen, also von der Einführachse Z fort weisenden ersten Abschnitt, dann einen zwischen einer Seitenfläche des zweiten Vorsprungelementes 32 und einer Seitenfläche der Aufnahmenut 201 definierten zweiten Abschnitt, daran anschließend einen zwischen der Stirnseite des zweiten Vorsprungelementes 32 und der Bodenfläche der Aufnahmenut 201 definierten dritten, radial gerichteten Abschnitt sowie einen parallel zu der Einführachse Z weisenden, zwischen der anderen Seitenfläche des zweiten Vorsprungelementes 32 und der anderen Seitenfläche der Aufnahmenut 201 definierten vierten Abschnitt auf, der in die Umgebung des Gehäuses 20 mündet. Der erste Abschnitt des zweiten Dichtspalts S' mündet in den ersten Dichtspalt S und schließt mit diesem einen Winkel von ca. 90° ein. Je zwei aneinander angrenzende Abschnitte des zweiten Dichtspalts S' weisen einen Winkel von ca. 90° auf, so dass der zweite Dichtspalt S' in der Bearbeitungsstellung der Greifvorrichtung 3 die Wirkung einer Labyrinthdichtung entfaltet.

Insgesamt erstreckt sich ein von innen nach außen durchgehender Gesamt-Dichtspalt S", dessen beide Abschnitte, nämlich der im Wesentlichen zu der Einführachse Z parallele erste Dichtspalt S sowie der zweite Dichtspalt S', in Fig. 5 dargestellt sind, zwischen der Greifvorrichtung 3 und dem Gehäuse 20. Dabei ändert ein Verlauf des Gesamt-Dichtspalts S" auf dem Weg von innen nach außen (das heißt aus dem Innern der Prozesskammer 2 bis in dem Umgebungsbereich außerhalb der Laserbearbeitungsvorrichtung 1) mehrfach deutlich seine Richtung und beinhaltet insbesondere mehrere Richtungsänderungen um 90°. Beispielsweise hat der radiale Spalt zwischen dem ersten Vorsprungabschnitt 31 und dem Gehäuse eine axiale Verlaufsrichtung (d. h. parallel zu der Einführachse Z), und der axiale Spalt zwischen dem zweiten Vorsprungabschnitt 32 und Nutgrund der Aufnahmenut 201 weist eine radiale Verlaufsrichtung (d. h. senkrecht zu der Einführachse Z) auf. Im Ergebnis bildet der zweite Dichtspalt S' somit eine Labyrinthdichtung aus, innerhalb derer sich die Laserstreustrahlung aus der Prozesskammer 2 effektiv verläuft

Da in der Bearbeitungsstellung der Gesamt-Dichtspalt S" zwischen der Greifvorrichtung 3 und dem Gehäuse 20 verbleibt, wird die Greifvorrichtung 3 beim Herstellen der Bearbeitungsstellung der Laserbearbeitungsvorrichtung 1 nicht "auf Block" (d. h. anliegend, so dass ein Abschnitt der Greifvorrichtung 3 das Gehäuse 20 berührt) gefahren. Vielmehr wird die Laserbearbeitungsvorrichtung 1 in die Bearbeitungsstellung gebracht, indem die Greifvorrichtung 3 berührungslos am Gehäuse 20 positioniert wird. Von der Erfindung umfasst ist somit ebenfalls ein Verfahren zum Betreiben der beschriebenen Laserbearbeitungsvorrichtung 1, wobei die Laserbearbeitungsvorrichtung 1 in die Bearbeitungsstellung gebracht wird, indem die Greifvorrichtung 3 berührungslos an dem Gehäuse 20 positioniert wird. Dies bringt den Vorteil mit sich, dass die Laserbearbeitungsvorrichtung 1 dynamisch betrieben werden kann, was eine schnellere Taktzeit ermöglicht.

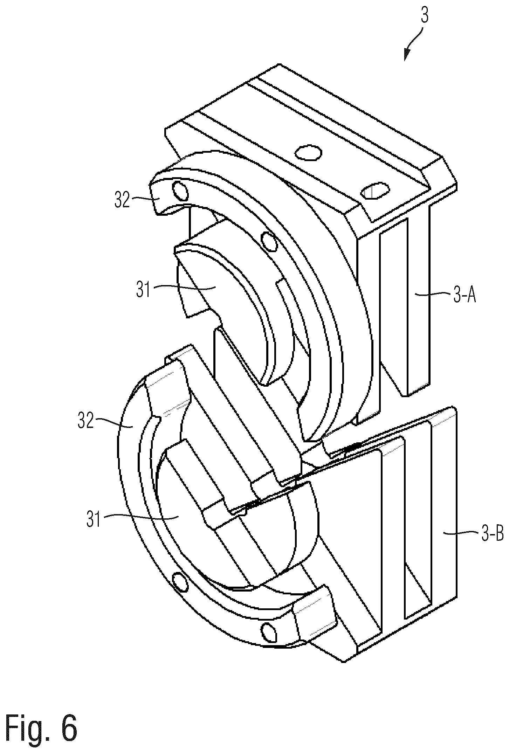

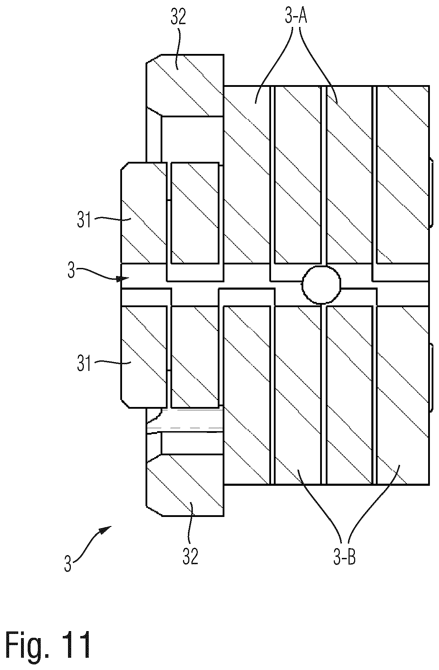

Die Fig. 6 bis 10 zeigen verschiedenen perspektivische Ansichten einer Greifvorrichtung 3 einer Laserbearbeitungsvorrichtung 1 gemäß einer oder mehreren Ausführungsformen. Fig. 11 zeigt eine axiale Querschnittsansicht einer solchen Greifvorrichtung 3. Die jeweils in den Fig. 1 und 3-5 dargestellten Greifvorrichtungen 3 können beispielsweise Greifvorrichtungen 3 der in den Fig. 6 bis 11 gezeigten und nachstehend näher erläuterten Art sein. Im Folgenden wird grundsätzlich auf alle Fig. 6 bis 11 zugleich Bezug genommen, wobei teilweise zusätzlich speziell auf einige der Figuren hingewiesen wird.

In Fig. 6 ist eine Greifvorrichtung 3 in einer geöffneten Stellung dargestellt. Daran wird deutlich, dass die Greifvorrichtung 3 zwei separate Teilstücke 3-A, 3-B in Form von Greiferbacken umfasst. Beispielsweise können die Greiferbacken 3-A, 3-B ein metallisches Material umfassen und insbesondere aus einem Metall bestehen.

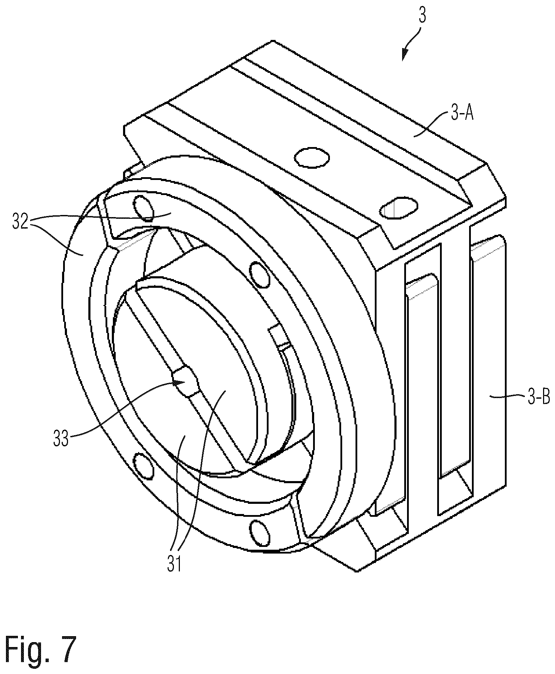

Fig. 7 veranschaulicht die Greifstellung der Greifvorrichtung 3 aus Fig. 6. Zum Einnehmen der Greifstellung werden die Greiferbacken 3-A, 3-B aneinander angesetzt. Dabei weist die Greifvorrichtung 3 mittig eine Durchführung 33 für die geschirmte Leitung 4 auf, in welche die (in Fig. 7 nicht gezeigte) geschirmte Leitung 4 in der geöffneten Stellung der Greifvorrichtung 3 eingelegt werden kann. Zum Herstellen der Greifstellung der Greifvorrichtung 3 können die Greiferbacken 3-A, 3-B beispielsweise mittels einer Pneumatik derart aufeinander zubewegt werden, dass die geschirmte Leitung 4 fest zwischen den Greiferbacken 3-A, 3-B eingeklemmt wird. Ein Mantel der Leitung 4 liegt dabei berührend an der Fläche der Durchführung 33 an.

Es kann dabei vorgesehen sein, dass eine Position der jeweiligen Greiferbacken 3-A, 3-B in automatisierter Weise sicherheitsgerichtet abgefragt wird, z. B. um Kollisionen zu vermeiden. Zum Erfassen der Positionen der Greiferbacken 3-A, 3-B können beispielsweise ein oder mehrere Sensoren, wie etwa laserbasierte oder induktive Sensoren, an der Greifvorrichtung 3 angeordnet sein.

Ferner können die beiden Greiferbacken 3-A, 3-B beispielsweise derart ausgestaltet sein, dass beim Schließen der Greifvorrichtung 3 (d. h. beim Einnehmen der Greifstellung) ein Überhub gefahren werden kann, wenn sich keine Leitung 4 zwischen den Greiferbacken 3-A, 3-B befindet. Damit ist gemeint, dass sich die verschiedenen Abschnitte der Greiferbacken 3-A, 3-B, welche, wie in Fig. 6 veranschaulicht, lamellenartig ineinander eingreifen können, über einen bestimmten Punkt, der der bestimmungsgemäßen Greifstellung mit eingelegter geschirmter Leitung 4 entspricht, hinaus ineinandergeschoben werden können. Der Überhub kann gegebenenfalls sensorisch erfasst werden, sodass eine nicht bestimmungsgemäße (fehlerhafte) Greifstellung automatisiert erkannt werden kann.

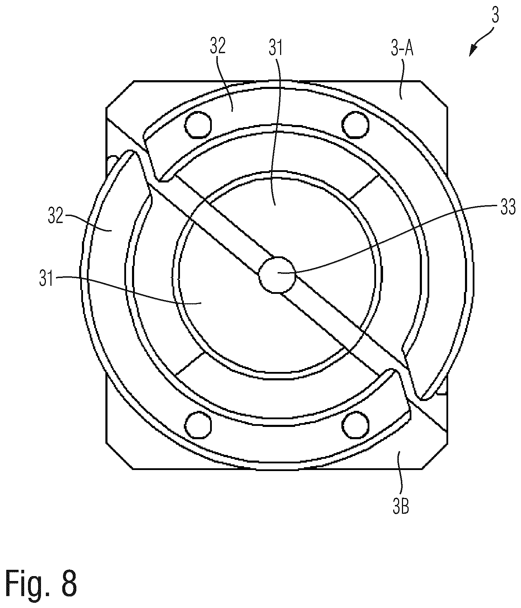

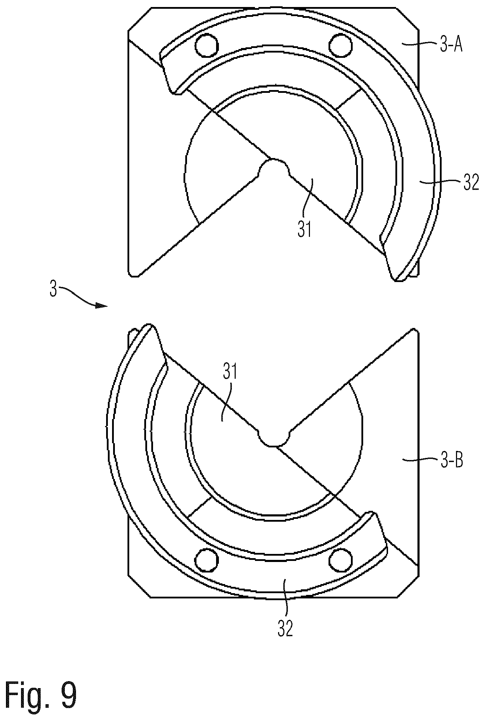

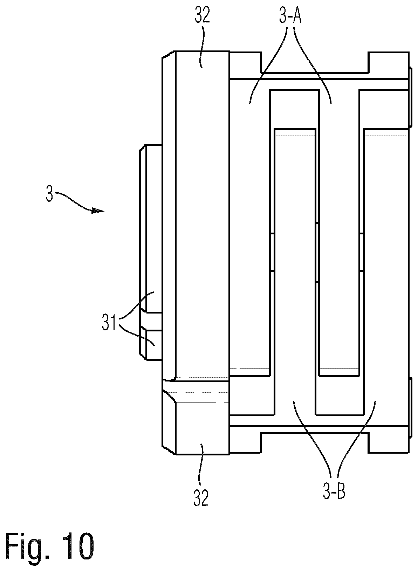

Die Fig. 8 zeigt die Greifstellung gemäß Fig. 7 in einer Frontalansicht der Greifvorrichtung 3. Die Fig. 9 zeigt die geöffnete Stellung gemäß Fig. 6 in einer Frontalansicht. Die Fig. 10 zeigt eine Seitenansicht der Greifvorrichtung 3 in der Greifstellung. Die Fig. 11 veranschaulicht einen entsprechenden axialen Querschnitt in der Greifstellung.

Beispielsweise anhand der Fig. 6 und 7 wird deutlich, dass bei diesem Ausführungsbeispiel sowohl der erste Vorsprungabschnitt 31 als auch der zweite Vorsprungabschnitt 32 axial gegenüber anderen Abschnitten der Greifvorrichtung 3 vorstehen. Dabei weisen beide Vorsprungabschnitte 31, 32 jeweils eine radialsymmetrische Grundform auf.

Der erste Vorsprungabschnitt 31 hat in der Greifstellung der Greifvorrichtung 3 eine kreiszylindrische oder kreisscheibenförmige Grundform, welche sich aus zwei Halbkreisscheiben, die jeweils zu einer der Greiferbacken 3-A, 3-B gehören, zusammensetzt. Die Ausbildung einer kreiszylindrischen oder kreisscheibenförmigen Grundform für die Umrisskontur des ersten Vorsprungabschnitts 31 stellt sicher, dass der sich zu der Innenseite der Öffnung 200 ausbildende Ringspalt S eine in Umlaufrichtung um die Einführachse Z im Wesentliche konstante Spaltdicke aufweist.

Der zweite Vorsprungabschnitt 32 ist - in der Greifstellung- in Form eines Kreisrings ausgestaltet, welcher den ersten Vorsprungabschnitt 31 vollständig radial umgibt. Dabei setzt sich der zweite Vorsprungabschnitt 32 aus zwei Halbringen zusammen, die jeweils an einer der Greiferbacken 3-A, 3-B ausgebildet sind. Der zweite Vorsprungabschnitt 32 ist hinsichtlich der Dimensionen an die beispielsweise in Fig. 2 veranschaulichte Aufnahmenut 201 des Gehäuses 20 angepasst, sodass der zweite Vorsprungabschnitt 32 in der Bearbeitungsstellung (unter Ausbildung des zweiten Dichtspalts S') in der Aufnahmenut 201 aufgenommen ist, ohne jedoch mit der Aufnahmenut 201 in Berührung zu gelangen.

Bei dem vorstehend beschriebenen Ausführungsbeispiel war der zweite Vorsprungabschnitt 32 durch einen einzigen Kreisring ausgebildet, der im Bereich des zweiten Dichtspalts S' eine einzige Labyrinthdichtung ausbildete. Es versteht sich, dass der zweite Vorsprungabschnitt 32 zwei oder mehrere Kreisringe umfassen kann, wobei jeder Kreisring jeweils eine zweite oder zusätzliche Labyrinthdichtung im Bereich des sich im Wesentlichen radial erstreckenden zweiten Dichtspalts S' ausbilden kann. Insbesondere lässt sich durch das Vorsehen von zusätzlichen Kreisringen die Dichtwirkung gegen den Austritt von Laserstrahlung auf einfache Weise noch verbessern.

Bei dem vorstehend beschriebenen Ausführungsbeispiel war vorgesehen, dass der erste Vorsprungabschnitt 31 eine bezüglich der Einführachse Z radialsymmetrische Grundform aufweist. Allgemein wird die Grundform des ersten Vorsprungabschnitts 31 in Hinblick auf die Querschnittskontur der Öffnung 200 so gewählt, dass der sich zwischen dem Umfang des ersten Vorsprungabschnitts 31 und der Innenseite der Öffnung 200 ausbildende Dichtspalt S (der nicht unbedingt ein Ringspalt sein muss) eine in Umfangsrichtung um die Einführachse Z im wesentlichen konstante Dicke aufweist. Beispielsweise kann vorgesehen sein, dass die Greifvorrichtung 3 zum Führen von zwei parallelen Kabeln 4 ausgebildet ist und entsprechend keine kreisförmige, sondern eine ovale Umrißkontur in Blickrichtung der Einführachse Z aufweist; entsprechend weist in diesem Fall die Öffnung 200 eine ovale Kontur der Innenseite auf. In diesem Fall ist für den ersten Vorsprungabschnitt 31 vorgesehen, dass dieser eine auf die Querschnittskontur der Innenseite der Öffnung 200 abgestimmte Außenkontur, also ebenfalls eine ovale Außenkontur aufweist, so dass der Dichtspalt S, der einen im Wesentlichen ovalen Verlauf aufweist, eine in Umlaufrichtung um die Einführachse Z im Wesentlichen konstante Dicke aufweisen kann.

### Bezugszeichenliste

- 1: Laserbearbeitungsvorrichtung

- 2: Prozesskammer
- 20: Gehäuse
- 200: Öffnung
- 201: Aufnahmenut

- 3: Greifvorrichtung
- 31: erster Vorsprungabschnitt
- 32: zweiter Vorsprungabschnitt
- 33: Durchführung
- 3-A: erstes Teilstück
- 3-B: zweites Teilstück

- 4: geschirmte Leitung
- 40: Endabschnitt

- L: Laserstrahlung
- S: (erster) Dichtspalt
- S': zweiter Dichtspalt
- S": Gesamt-Dichtspalt
- Z: Einführachse

## Patentansprüche

1. Laserbearbeitungsvorrichtung (1) für geschirmte Leitungen (4), umfassend:
- eine Prozesskammer (2) zum Bearbeiten eines darin angeordneten Endabschnitts (40) einer geschirmten Leitung (4) mittels Laserstrahlung (L), wobei ein Gehäuse (20) der Prozesskammer (2) eine Öffnung (200) zum Einführen des Endabschnitts (40) entlang einer Einführachse (Z) definiert;
- weiter aufweisend eine Lasereinrichtung zum Erzeugen der Laserstrahlung (L), und
- eine Greifvorrichtung (3) zum Fixieren der geschirmten Leitung (4) in der Öffnung (200) in einer Bearbeitungsstellung der Laserbearbeitungsvorrichtung (1), wobei sich der Endabschnitt (40) in der Bearbeitungsstellung in die Prozesskammer (2) hinein erstreckt;
wobei die Greifvorrichtung (3) in der Bearbeitungsstellung berührungslos an dem Gehäuse (20) positioniert ist,
wobei die Greifvorrichtung (3) einen ersten Vorsprungabschnitt (31) umfasst, der sich in der Bearbeitungsstellung der Laserbearbeitungsvorrichtung (1) wenigstens abschnittsweise entlang der Einführachse (Z) in die Öffnung (200) hinein erstreckt, wobei in der Bearbeitungsstellung der erste Vorsprungabschnitt (31) die Öffnung (200) so weit ausfüllt, dass ein durchgehender Dichtspalt (S) zwischen der Greifvorrichtung (3) und dem Gehäuse (20) verbleibt,
**dadurch gekennzeichnet,**
**dass** die Greifvorrichtung (3) in der Bearbeitungsstellung die Öffnung (200) in einer Richtung entlang der Einführachse (Z) vollständig abdeckt.

2. Laserbearbeitungsvorrichtung (1) nach Anspruch 1, wobei die Dicke des Dichtspalts (S) weniger als ca. 5 %des Durchmessers der Öffnung (200) beträgt.

3. Laserbearbeitungsvorrichtung (1) nach Anspruch 2,wobei die Dicke des Dichtspalts (S) ca. 3 % des Durchmessers der Öffnung (200) beträgt.

4. Laserbearbeitungsvorrichtung (1) nach einem der vorstehenden Ansprüche, wobei in der Bearbeitungsstellung ein zwischen dem Gehäuse (20) und der Greifvorrichtung (3) verbleibender Dichtspalt (S, S',S") eine Labyrinthdichtung für die Laserstrahlung (L) bildet.

5. Laserbearbeitungsvorrichtung (1) nach einem der vorstehenden Ansprüche, wobei der erste Vorsprungabschnitt (31) eine bezüglich der Einführachse (Z) radialsymmetrische Grundform aufweist.

6. Laserbearbeitungsvorrichtung (1) nach einem der vorstehenden Ansprüche, wobei die Greifvorrichtung (3) einen zweiten Vorsprungabschnitt (32) aufweist, der den ersten Vorsprungabschnitt (31) umgibt.

7. Laserbearbeitungsvorrichtung (1) nach einem der vorstehenden Ansprüche, wobei das Gehäuse (20) eine die Öffnung (200) umgebende Aufnahmenut (201) aufweist, in welcher in der Bearbeitungsstellung wenigstens ein Abschnitt (32) der Greifvorrichtung (3) aufgenommen ist.

8. Laserbearbeitungsvorrichtung (1) nach Anspruch 7, insoweit rückbezogen auf Anspruch 6, wobei der zweite Vorsprungabschnitt (32) in der Bearbeitungsstellung wenigstens teilweise in der Aufnahmenut (201) aufgenommen ist.

9. Laserbearbeitungsvorrichtung (1) nach einem der vorstehenden Ansprüche, wobei die Greifvorrichtung (3) wenigstens zwei Teilstücke (3-A, 3-B) umfasst, die zum Einnehmen einer Greifstellung, in welcher die Greifvorrichtung (3) die geschirmte Leitung (4) greift, aneinander ansetzbar sind.

10. Verfahren zum Betreiben einer Laserbearbeitungsvorrichtung (1) nach einem der vorstehenden Ansprüche, wobei die Laserbearbeitungsvorrichtung (1) in die Bearbeitungsstellung gebracht wird, indem die Greifvorrichtung (3) berührungslos an dem Gehäuse (20) positioniert wird, so dass in der Bearbeitungsstellung ein erster Vorsprungabschnitt (31) sich in die Öffnung (200) des Gehäuses (20) erstreckt und ein durchgehender Dichtspalt (S) zwischen der Greifvorrichtung (3) und dem Gehäuse (20) verbleibt, wobei die Greifvorrichtung (3) in der Bearbeitungsstellung die Öffnung (200) in einer Richtung entlang der Einführachse (Z) vollständig abdeckt.

## Claims

1. Laser machining device (1) for shielded lines (4), comprising:
- a process chamber (2) for machining an end portion (40) of a shielded line (4) disposed therein by means of laser radiation (L), wherein a housing (20) of the process chamber (2) defines an opening (200) for introducing the end portion (40) along an introduction axis (Z);
- furthermore having a laser unit for generating the laser radiation (L), and
- a gripping device (3) for fixing the shielded line (4) in the opening (200) in a machining position of the laser machining device (1), wherein in the machining position the end portion (40) extends into the process chamber (2);
wherein in the machining position the gripping device (3) is positioned in a non-contacting manner on the housing (20),
wherein the gripping device (3) comprises a first protrusion portion (31), which in the machining position of the laser machining device (1) extends at least in portions along the introduction axis (Z) into the opening (200),
wherein in the machining position the first protrusion portion (31) fills the opening (200) to the extent that a continuous sealing gap (S) remains between the gripping device (3) and the housing (20),
**characterized in that**
the gripping device (3) in the machining position completely covers the opening (200) in a direction along the introduction axis (Z).

2. Laser machining device (1) according to Claim 1, wherein the thickness of the sealing gap (S) is less than approx. 5% of the diameter of the opening (200).

3. Laser machining device (1) according to Claim 2, wherein the thickness of the sealing gap (S) is approx. 3% of the diameter of the opening (200).

4. Laser machining device (1) according to one of the preceding claims, wherein in the machining position a sealing gap (S, S', S") remaining between the housing (20) and the gripping device (3) forms a labyrinth seal for the laser radiation (L).

5. Laser machining device (1) according to one of the preceding claims, wherein the first protrusion portion (31) has a radially symmetrical basic shape with respect to the introduction axis (Z).

6. Laser machining device (1) according to one of the preceding claims, wherein the gripping device (3) has a second protrusion portion (32) which surrounds the first protrusion portion (31).

7. Laser machining device (1) according to one of the preceding claims, wherein the housing (20) has a receptacle groove (201) which surrounds the opening (200) and in which at least one portion (32) of the gripping device (3) is received in the machining position.

8. Laser machining device (1) according to Claim 7, if referring back to Claim 6, wherein the second protrusion portion (32) in the machining position is at least partially received in the receptacle groove (201).

9. Laser machining device (1) according to one of the preceding claims, wherein the gripping device (3) comprises at least two parts (3-A, 3-B) which are able to be attached to one another for assuming a gripping position in which the gripping device (3) grips the shielded line (4).

10. Method for operating a laser machining device (1) according to one of the preceding claims, wherein the laser machining device (1) is moved to the machining position by positioning the gripping device (3) in non-contacting manner on the housing (20) in such a way that, in the machining position, a first protrusion portion (31) extends into the opening (200) of the housing (20) and a continuous sealing gap (S) remains between the gripping device (3) and the housing (20), wherein in the machining position the gripping device (3) completely covers the opening (200) in a direction along the introduction axis (Z).

## Revendications

1. Dispositif d'usinage laser (1) pour conduites blindées (4), comprenant :
- une chambre de processus (2), pour traiter par rayonnement laser (L) une partie d'extrémité (40) d'une conduite blindée (4) placée à l'intérieur d'elle-même, un boîtier (20) de la chambre de processus (2) définissant une ouverture (200) pour l'insertion de la partie d'extrémité (40) selon un axe d'insertion (Z) ;
- comprenant en outre un dispositif laser, pour générer le rayonnement laser (L), et
- un dispositif de préhension (3), pour fixer la conduite blindée (4) dans l'ouverture (200) dans une position de traitement du dispositif d'usinage laser (1), la partie d'extrémité (40) s'étendant dans la chambre de processus (2) dans la position de traitement ;
le dispositif de préhension (3) étant positionné sans contact sur le boîtier (20) dans la position de traitement,
le dispositif de préhension (3) comprenant une première partie en saillie (31) qui, dans la position de traitement du dispositif d'usinage laser (1), s'étend au moins partiellement selon l'axe d'insertion (Z) dans l'ouverture (200),
la première partie en saillie (31), dans la position de traitement, remplissant l'ouverture (200) de telle sorte qu'un interstice d'étanchéité (S) continu subsiste entre le dispositif de préhension (3) et le boîtier (20),
**caractérisé en ce que**,
dans la position de traitement, le dispositif de préhension (3) recouvre complètement l'ouverture (200) dans une direction selon l'axe d'insertion (Z).

2. Dispositif d'usinage laser (1) selon la revendication 1, dans lequel l'épaisseur de l'interstice d'étanchéité (S) est inférieure à environ 5 % du diamètre de l'ouverture (200).

3. Dispositif d'usinage laser (1) selon la revendication 2, dans lequel l'épaisseur de l'interstice d'étanchéité (S) est d'environ 3 % du diamètre de l'ouverture (200).

4. Dispositif d'usinage laser (1) selon l'une des revendications précédentes, dans lequel, en position de traitement, un interstice d'étanchéité (S, S', S") subsistant entre le boîtier (20) et le dispositif de préhension (3) forme un joint labyrinthe pour le rayonnement laser (L).

5. Dispositif d'usinage laser (1) selon l'une des revendications précédentes, dans lequel la première partie en saillie (31) présente une forme de base radialement symétrique par rapport à l'axe d'insertion (Z).

6. Dispositif d'usinage laser (1) selon l'une des revendications précédentes, dans lequel le dispositif de préhension (3) présente une deuxième partie en saillie (32) qui entoure la première partie en saillie (31).

7. Dispositif d'usinage laser (1) selon l'une des revendications précédentes, dans lequel le boîtier (20) présente une rainure de réception (201) entourant l'ouverture (200), dans laquelle, en position de traitement, au moins une partie (32) du dispositif de préhension (3) est reçue.

8. Dispositif d'usinage laser (1) selon la revendication 7, en tant qu'elle est rattachée à la revendication 6, dans lequel la deuxième partie en saillie (32) est, en position de traitement, au moins partiellement reçue dans la rainure de réception (201).

9. Dispositif d'usinage laser (1) selon l'une des revendications précédentes, dans lequel le dispositif de préhension (3) comprend au moins deux parties (3-A, 3-B) qui sont aptes à être assemblées l'une à l'autre pour prendre une position de préhension dans laquelle le dispositif de préhension (3) saisit la conduite blindée (4).

10. Procédé pour faire fonctionner un dispositif d'usinage laser (1) selon l'une des revendications précédentes, dans lequel le dispositif d'usinage laser (1) est amené dans la position de traitement en positionnant le dispositif de préhension (3) sans contact sur le boîtier (20), de sorte que, dans la position de traitement, une première partie en saillie (31) s'étend dans l'ouverture (200) du boîtier (20) et qu'un interstice d'étanchéité (S) continu subsiste entre le dispositif de préhension (3) et le boîtier (20), le dispositif de préhension (3), dans la position de traitement, recouvrant complètement l'ouverture (200) dans une direction selon l'axe d'insertion (Z).
